# EUROPEAN PATENT SPECIFICATION

(11) **EP 1 696 626 B1**
(45) Date of publication and mention of the grant of the patent: **21.01.2015**
(21) Application number: 05101518.8
(22) Date of filing: 28.02.2005
(51) Int. Cl.: H04W 12/06, H04L 29/06

(54) **Method and System for Enhanced Security Using Location Based Wireless Authentication**
Vorrichtung und Verfahren zur Verbesserung der Sicherheit durch platzbasierte drahtlose Authentifizierung
Méthode et système de sécurité par authentification sans fil basée sur une position géographique

(43) Date of publication of application: 30.08.2006
(73) Proprietor: BlackBerry Limited, Waterloo, ON N2K 0A7 (CA)
(72) Inventor: Clough, Ian, Ottawa, Ontario K1T 1C1 (CA)
(74) Representative: Moore, Barry

(56) References cited:
- WO-A-2004/012424
- WO-A-2004/095857
- WO-A2-2004/079499
- US-A1- 2003 120 940

## Description

The present application deals with enhanced security for transactions involving a wireless device, and in particular deals with the use of the location of the wireless device to provide an additional level of security for a wireless transaction.

It is often necessary to identify the user of a remote device to facilitate a transaction. However, spoofing often occurs to fake digital credentials or the identity of a user. Further, basic security means such as a numerical personal identification number may not provide the level of security required for a transaction.

No method of authentication is foolproof. Passwords and personal identification numbers can be cracked through guessing or brute force computation techniques. Devices can be stolen. Security information can be intercepted and replayed at a future time.

In many transactions, it would be helpful if the location of the device was verified to ensure that the transaction was occurring at a logical place. For example, if a user is using a mobile device to perform a transaction at a physical store, location metrics that indicate that the device is actually physically located in a different city, part of the country, or part of the world than the store would provide an indicator that the transaction should not proceed.

Various methods to providing geographic locations have been proposed. These include a paper entitled *"*Location-based Authentication: Grounding Cyberspace for Better Security', Dorothy E. Denning and Peter F. McDorran, Computer Fraud and Security, 1996, Elsevier Science Ltd., which proposes to use global positioning system signals from a network of satellites in order to provide the physical location of a mobile device. The problem with this and other similar solutions is that the location information is conveyed from the mobile device. This creates various issues. As described in the above-mentioned reference, the device is required to contain global positioning system receivers that are specially built in order to avoid spoofing. This is a costly technical solution that would require the modification of commercial mobile devices, such as cellular telephones, mobile data devices, or other current wireless devices. Without the use of special GPS-based receivers, the author admits that commercial GPS receivers are readily spoofed. Thus the above uses either expensive modifications or adds little security.
WO04/012424 discloses a system and method for determining a physical location of a node in a wireless network during an authentication check of the node. The method comprises determining whether a mobile node is physically located within a predetermined area of coverage. The method is for authenticating access to a network and is more directed to deciding whether or not the mobile node can gain access to the network.
WO02/095857 discloses an apparatus and method for location-based wireless client authentication. Authentication is based on the location of the client and access is granted if the client falls within a predefined wireless network boundary. The method is directed to the connection of a mobile client such as a laptop computer to a physical network node.
US2003/120940 discloses a system and method to protect media content via location-based data. Multimedia devices are equipped with locator devices, such as a GPS unit, or similar device. When multimedia content is created on the multimedia device, such as image or sound file, the multimedia content is encoded with location data from the locator device.
WO2004/07949 discloses a system whereby transaction requests originating from a designated terminal in a conventional network are authorized by the fact that a user's traceable device such as a wireless device can be located in the vicinity of where the transaction originated. The transaction request is not, however, originated by the wireless device.

The present system and method provide enhanced security by adding geographic data to a transaction request. The system and method use a carrier rather than a mobile device to add geographic information to a transaction. The geographic information is available for wireless communications based on the enhanced 911 (E911) system for mobile devices that is now required by the U.S. Federal Communications Commission (US FCC). The same technology can be used to validate transactions.

The present system and method provide enhanced security since the geographic information is added by the carrier, and is therefore impossible to spoof from the mobile device. Further, since the technology is commercially available and is required in wireless devices, no additional hardware is required in the mobile devices.

The present application therefore provides a system for enhanced security using location-based wireless authentication comprising: a mobile device, the mobile device having a unique identifier associated therewith and capable of sending a message with the unique identifier appended thereto; a base station, the base station capable of receiving the message from the mobile device and having: a location detection system to locate the mobile device, the base station forwarding the message through a data network; and means to append a location identifier to said message; and a recipient device, system or apparatus, the recipient receiving the message through the data network and having means to authenticate the message, the means to authenticate the message comprising a checking means to check whether the location identifier corresponds with an expected location for the mobile device, the expected location for the mobile device being a geographic location known to the recipient.

The present application further provides a method for enhancing security using location-based wireless authentication for a mobile device comprising the steps of: sending from the mobile device to a base station a message, the message having a unique identifier associated with the mobile device; appending, at the base station, a location identifier to said message; sending the message to a recipient device, system or apparatus; and authenticating the message at the recipient, said authenticating step confirming that the location identifier appended at the base station corresponds with an expected location for the mobile device, the expected location for the mobile device being a geographic location known to the recipient.

### Brief Description of the Drawings

The present system and method will be better understood with reference to the drawings in which:
**Figure 1** is a diagram of a data path of an exemplary transaction according to the present system and method;
**Figure 2** is a simplified flow chart of a method according to the present application; and
**Figure 3** is a block diagram of an exemplary mobile device that can be used in accordance with the present system and method.

### DESCRIPTION OF PREFERRED EMBODIMENTS

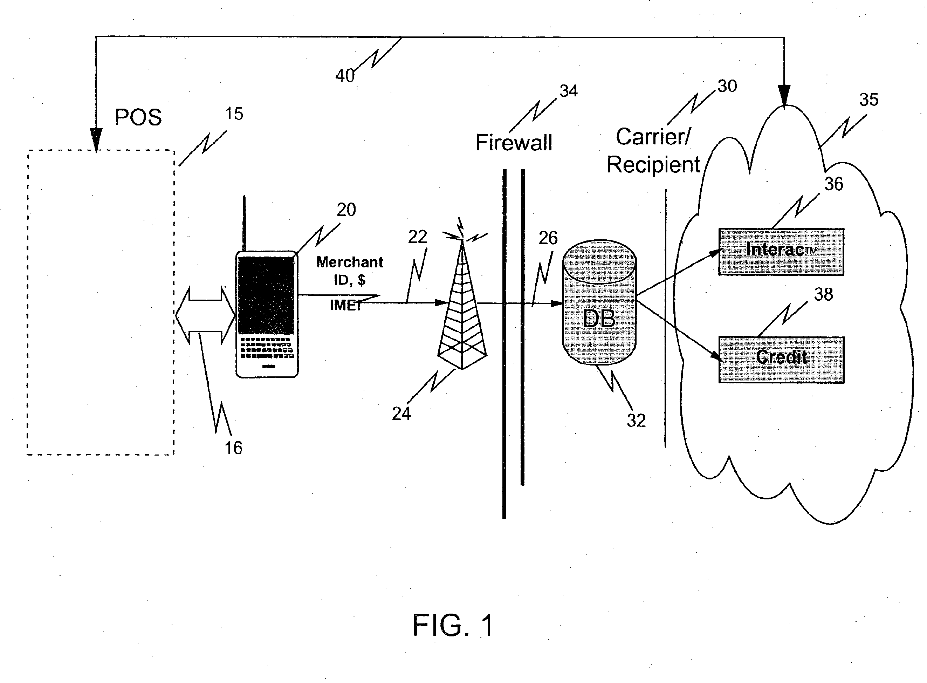

The present system and method may best be seen through an example, as is illustrated in **Figure 1** and described below. However, the present system and method is not meant to be limited to the system of **Figure 1****,** and is rather meant to encompass any transaction that has enhanced security through the addition of geographic information by a carrier.

Reference is now made to **Figure 1****.** In an example application, a user wishes to purchase a product at a local point of sale **15.** The point of sale could be any physical store that is stationary and whose location is known in a system database. In alternative embodiments point of sale 15 could be a mobile store or vendor, but in this case the location of the vendor will also need to be determined.

In the system of Figure 1, a user does not need to carry a credit or debit card or cash, but rather can perform a transaction using a mobile device. Such mobile devices are known in the art, and generally can include any data enabled device that is capable of wirelessly performing a transaction.

In the example of Figure 1, each point of sale includes a merchant identification. On a wireless device 20, a user would add the merchant identifier and the amount that the user is going to pay the merchant. This information can be added to mobile device 20 either through input using a keyboard, keypad or other similar means, or through local communication means such as Bluetooth, IrDA, a USB cable, or other connection known to those skilled in the art. As will be appreciated, a password challenge could be added for authentication or the user could be required to enter a personal identification number or password in order to proceed with the transaction.

Wireless device 20 is associated with the point of sale 15 through a physical location matrix 16. Physical location metrics 16 can place wireless device 20 within, close to or removed from point of sale 15,

Once the information is entered, it is transmitted wirelessly to base station 24 using a transmission 22. Transmission 22 includes the merchant ID number, the amount, and a unique identifier. The unique identifier preferably includes at least the international mobile equipment identifier (IMEI), and could include password information.

As will be realized by one skilled in the art, it is preferable that transmission 22 be encrypted, and such encryption is well known.

At base station 24, location information is further added to transmission 22. This location information is preferably based on the enhanced 911 system and based on FCC requirements can identify the location of a mobile device to at least within 150m of its actual location. This is then sent as a message 26 to a carrier 30. Other location identifiers could however be used at the base station, including the physical location of the base station.

Carrier 30 preferably includes a database 32 which can be used for validating the merchant identifier. The merchant identifier is associated with a known geographic location X. The carrier 30 can then compare known geographic location X with the location added to transmission 26. The system is predicated on both the merchant and the user being in the same location, and if locations differ, the transaction will be found to be invalid and will not proceed. Transmission 26 may also have to pass through a firewall 34.

If the transaction is found to be in a valid location, the carrier can then pass the transaction to a debit system such as Interac™ system 36 or, if the carrier is large enough, the carrier can be used to provide credit to the user with credit system 38 in order to complete the transaction. These systems can be cumulatively or individually referred to as a point of sale processing location 35.

As will be appreciated, the merchant will likely require feedback from the carrier 30 or from an Interac™ system 36 to ensure that the transaction has been approved prior to giving the merchandise to the user. This could include, for example, a message along channel 40 between the point of sale processing location 35 and the point of sale 15.

The system can include, therefore, a user at a remote vendor or coin operated point of sale. The user can use the mobile station, which knows a transaction is occurring through a message from the vendor (by serial connection, or over the air) to display a dialog requesting a vendor ID and amount. The vendor ID could also be provided over the connection or message by the vendor.

The user can be prompted for a PIN or password. This information is encrypted and sent over the air to the financial institution. The financial institution further receives a coordinate for the device and this can be verified against the vendor ID provided. The results of the transaction can be sent to the user. Results can further be sent to the merchant over a normal channel, such as, for example an Interac™ channel.

The above therefore provides a system for a transaction with enhanced security by adding geographic information to the transaction. The geographic information is added at a carrier and can therefore not be spoofed by the mobile device. Further, since FCC requirements for mobile devices include the enhanced 911 system for locating the mobile device, no additional hardware is required on mobile devices that are compliant with FCC regulations. Similar regulations exist in other jurisdictions.

As will be appreciated by those skilled in the art, other examples and application could be used with the location identifier being added at base station 24. For example, if an application is only meant to run in a sports stadium, the application could be programmed to request a password or a start code from a carrier or verification company, and the start code would only be given if the physical location of the mobile device was verified.

In the sports stadium case, the message send to the base station could be a request for the start code. The message includes a unique identifier for the mobile device. In the sports stadium case no merchant ID, nor transaction amount is required to be in the message sent. The start code request is appended with the location at the base station, preferably using the Enhanced 911 system.

The message, with the unique identifier and the location code is then passed to a recipient. In this case the recipient could be the carrier, who has a deal with the stadium, or it could be to the company providing the enhanced service directly, or to some other verification company.

The recipient then verifies that the start code should be sent. This decision could be based on the unique identifier, for example to check whether the owner of the mobile device has prepaid for the service. The decision is also based on the location identifier. If the location is the sports stadium then the start code could be sent. Otherwise the start code will not be sent.

Yet further applications for the present system and method could include the verification of a geographic location before a transaction can proceed. For example, in a network communication, the network may require the verified location of the device prior to allowing access beyond a firewall. This could be used to help track the location of the mobile device if there is a security breach in the network.

Again, in this case the mobile device sends a message including a unique identifier for the mobile device, along with whatever information is needed by the network, to a base station. The base station appends the location information and the modified message is passed to the carrier or other recipient for verification.

The recipient verifies the information based on factors including the location and allows the mobile device access to the network.

In a further alternative embodiment, a normal commercial transaction between a point of sale 15 and a point of sale processing location 35 can occur. As an added level of security, a location metric can be used to verify the user is in the location of the vendor.

For example, a user wishing to purchase goods using a debit card could swipe his/her card at a standard terminal as normal and enter a pin number. The transaction occurs using channel 40 between point of sale processing location 35 and the terminal at the point of sale 15.

At point of sale processing location 35, the Interac™ system 36 or credit system 38 access the account and find that the account requires an added level of security. The location of the user needs to be verified.

The point of sale processing location 35 communicates with a database 32 to verify the location of a mobile device 20 associated with the user. Alternatively this information could be passed to point of sale processing location 35.

In order to obtain the location of mobile device 20, database 32 can either send a message to the mobile device 20 asking mobile device 20 for its current location, or a record can be stored regarding the last location of mobile device 20. For most mobile devices 20, a message is passed between base station 24 and the mobile device periodically to ensure the mobile device is still on the network. The location of the mobile device 20 can be stored based on this message. Further, if mobile device 20 moves to a different base station 24 a handshaking routine occurs and the location can be stored based on this routine.

If relying on stored location information, the system may not be able to match the last location of the mobile device 20 to the exact point of sale 15. However, the carrier or recipient could perform an assessment to determine whether the mobile device 20 could have moved to the location of the vendor since the location of the mobile device 20 was last stored.

Thus based on either the query or on the last location of the mobile device 20, a carrier/recipient can determine whether it is logical for the transaction to occur. If the mobile station could not possibly be at the point of sale 15 then the carrier/recipient can inform the point of sale processing location 35 and the transaction can be stopped.

As will be appreciated by those skilled in the art, the transaction can be stopped by indicating that there are insufficient funds to complete the transaction, by sending some form of error code back to point of sale 15, or through other means normally available for commercial transactions like this. In one alternative embodiment, a verification message could be sent to mobile device 15 asking the user to allow or prohibit the transaction if there appears to be a discrepancy.

The above alternative solution presents the advantage that nothing needs to be keyed into the mobile device but that an added layer of security is added to the transaction. Further, the added level of security will likely not be apparent to those witnessing the transaction. For example, if an attendant obtains a copy of the data when a card is swiped and observes the PIN, he or she will likely not be aware that the mobile device the user had in her purse was also a necessary part of the transaction, and an attempt to use the stolen information at a later time will fail.

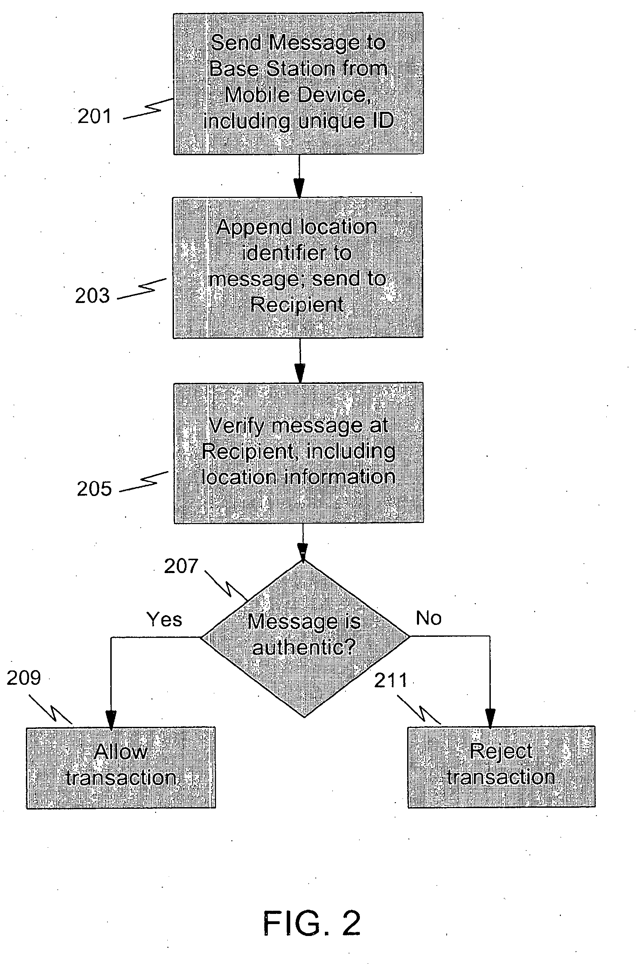

The above is shown in the simplified flowchart of Figure 2. Figure 2 shows that at step 201 a mobile device sends a message to a base station. The message can include any number of parameters, but will include at least a unique identifier identifying the mobile device. Other parameters could include a merchant ID and dollar amount for a transaction that the user is trying to pay for, or an identifier for the application that the user is trying to open, or a PIN or other password. In the case where the user is using a standard point of sale device to complete the transaction, the message could be verification that the device is still active. If the mobile device 20 is being used for the transaction other information such as the merchant ID may be required.

In step 203 the base station receives the message and appends a geographic indicator. This is preferably done through the enhanced 911 (E911) system. The message is then routed to the carrier and possibly though a data network to a different recipient.

The carrier or recipient receives the message at step 205 and authenticates the message. Authentication can be a check that the password and unique identifier match, or that an application is associated with the unique identifier, or other authentication that would be known to those skilled in the art. Alternatively, the carrier or recipient could simply store the location of the mobile device 20 based on the message.

If the message is part of an active transaction or a response to a location inquiry, the authentication also includes a check to ensure the location for the mobile device is the expected location. That is, if the user is in a financial transaction with a merchant, the authentication step confirms that the mobile device is at a location appropriate for such a transaction. If the mobile device is trying to access an application that can only run at a stadium, the authentication step can confirm the mobile device is at the stadium.

In step 207 a check is made to see if the authentication step showed the message was authentic. If so, the recipient proceeds to step 209 in which the transaction is allowed to proceed. This could include sending information back to the mobile device such as a start code for the application, sending the transaction on to a financial service to continue the transaction, or sending verification of the location of the mobile device to a financial service. Such a service could debit a user's account or credit card and send confirmation that the transaction has gone through to both the user and to the merchant, for example.

If in step 207 the message is found not to be authentic, for example if the user is located in a different city than the merchant or the user is in a different part of town from the stadium, then the recipient rejects the transaction and appropriate messages are preferably sent back to the user and possibly to the merchant.

Figure 2 therefore illustrates a method for the location-based authentication of a message from a mobile device.

As will be appreciated by those skilled in the art, the addition of the unique identifier at the mobile device, along with a PIN if required, is accomplished as part of the transport layer in the mobile device, and not at the application layer. This further enhances the security since in most instances the user cannot change the IMEI number.

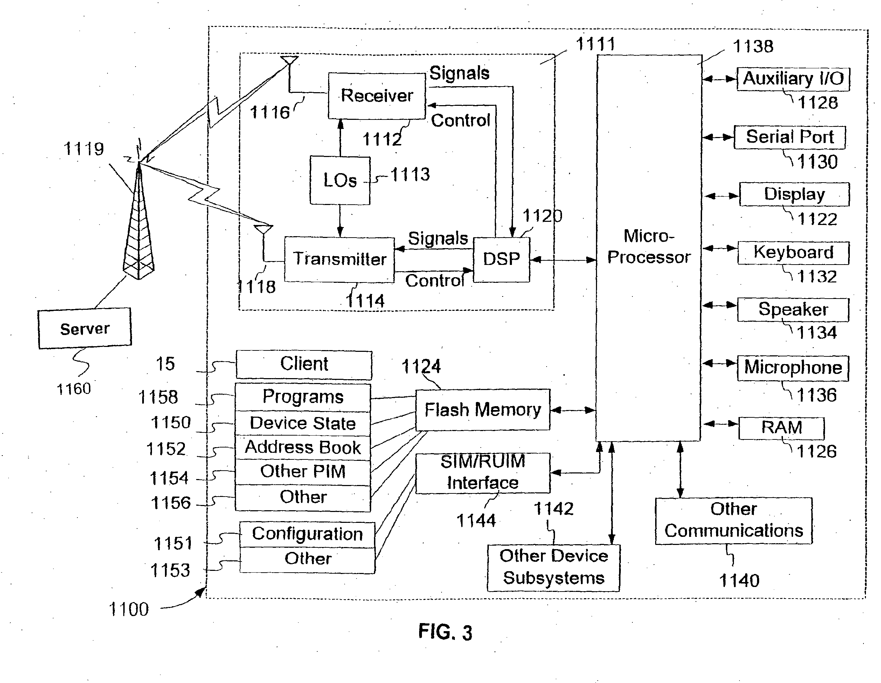

Reference is now made to Figure 3. Figure 3 is a block diagram illustrating a host mobile device including preferred embodiments of the techniques of the present application. Mobile device 1100 is preferably a two-way wireless communication device having at least voice and data communication capabilities. Mobile device 1100 preferably has the capability to communicate with other computer systems on the Internet. Depending on the exact functionality provided, the wireless device may be referred to as a data messaging device, a two-way pager, a wireless e-mail device, a cellular telephone with data messaging capabilities, a wireless Internet appliance, or a data communication device, as examples.

Where mobile device 1100 is enabled for two-way communication, it will incorporate a communication subsystem 1111, including both a receiver 1112 and a transmitter 1114, as well as associated components such as one or more, preferably embedded or internal, antenna elements 1116 and 1118, local oscillators (LOs) 1113, and a processing module such as a digital signal processor (DSP) 1120. As will be apparent to those skilled in the field of communications, the particular design of the communication subsystem 1111 will be dependent upon the communication network in which the device is intended to operate. For example, mobile device 1100 may include a communication subsystem 1111 designed to operate within the Mobitex™ mobile communication system, the DataTAC™ mobile communication system, GPRS network, UMTS network, EDGE network or CDMA network.

Network access requirements will also vary depending upon the type of network 1119. For example, in the Mobitex and DataTAC networks, mobile device 1100 is registered on the network using a unique identification number associated with each mobile device. In UMTS and GPRS networks, and in some CDMA networks, however, network access is associated with a subscriber or user of mobile device 1100. A GPRS mobile device therefore requires a subscriber identity module (SIM) card in order to operate on a GPRS network, and a RUIM in order to operate on some CDMA networks. Without a valid SIM/RUIM card, a GPRS/UMTS/CDMA mobile device may not be fully functional. Local or non-network communication functions, as well as legally required functions (if any) such as emergency calling, may be available, but mobile device 1100 will be unable to carry out any other functions involving communications over the network 1100. The SIM/RUIM interface 1144 is normally similar to a card-slot into which a SIM/RUIM card can be inserted and ejected like a diskette or PCMCIA card. The SIM/RUIM card can have approximately 64K of memory and hold many key configuration 1151, and other information 1153 such as identification, and subscriber related information.

When required network registration or activation procedures have been completed, mobile device 1100 may send and receive communication signals over the network 1119. Signals received by antenna 1116 through communication network 1119 are input to receiver 1112, which may perform such common receiver functions as signal amplification, frequency down conversion, filtering, channel selection and the like, and in the example system shown in Figure 3, analog to digital (A/D) conversion. A/D conversion of a received signal allows more complex communication functions such as demodulation and decoding to be performed in the DSP 1120. In a similar manner, signals to be transmitted are processed, including modulation and encoding for example, by DSP 1120 and input to transmitter 1114 for digital to analog conversion, frequency up conversion, filtering, amplification and transmission over the communication network 1119 via antenna 1118. DSP 1120 not only processes communication signals, but also provides for receiver and transmitter control. For example, the gains applied to communication signals in receiver 1112 and transmitter 1114 may be adaptively controlled through automatic gain control algorithms implemented in DSP 1120.

Network 1119 may further communicate with multiple systems, including a server 1160 and other elements (not shown). For example, network 1119 may communicate with both an enterprise system and a web client system in order to accommodate various clients with various service levels.

Mobile device 1100 preferably includes a microprocessor 1138 which controls the overall operation of the device. Communication functions, including at least data and voice communications, are performed through communication subsystem 1111. Microprocessor 1138 also interacts with further device subsystems such as the display 1122, flash memory 1124, random access memory (RAM) 1126, auxiliary input/output (I/O) subsystems 1128, serial port 1130, keyboard 1132, speaker 1134, microphone 1136, a short-range communications subsystem 1140 and any other device subsystems generally designated as 1142.

Some of the subsystems shown in Figure 3 perform communication-related functions, whereas other subsystems may provide "resident" or on-device functions. Notably, some subsystems, such as keyboard 1132 and display 1122, for example, may be used for both communication-related functions, such as entering a text message for transmission over a communication network, and device-resident functions such as a calculator or task list.

Operating system software used by the microprocessor 1138 is preferably stored in a persistent store such as flash memory 1124, which may instead be a read-only memory (ROM) or similar storage element (not shown). Those skilled in the art will appreciate that the operating system, specific device applications, or parts thereof, may be temporarily loaded into a volatile memory such as RAM 1126. Received communication signals may also be stored in RAM 1126. Further, a unique identifier is also preferably stored in read-only memory.

As shown, flash memory 1124 can be segregated into different areas for both computer programs 1158 and program data storage 1150, 1152, 1154 and 1156. These different storage types indicate that each program can allocate a portion of flash memory 1124 for their own data storage requirements. Microprocessor 1138, in addition to its operating system functions, preferably enables execution of software applications on the mobile device. A predetermined set of applications that control basic operations, including at least data and voice communication applications for example, will normally be installed on mobile device 1100 during manufacturing. A preferred software application may be a personal information manager (PIM) application having the ability to organize and manage data items relating to the user of the mobile device such as, but not limited to, e-mail, calendar events, voice mails, appointments, and task items. Naturally, one or more memory stores would be available on the mobile device to facilitate storage of PIM data items. Such PIM application would preferably have the ability to send and receive data items, via the wireless network 1119. In a preferred embodiment, the PIM data items are seamlessly integrated, synchronized and updated, via the wireless network 1119, with the mobile device user's corresponding data items stored or associated with a host computer system. Further applications may also be loaded onto the mobile device 1100 through the network 1119, an auxiliary I/O subsystem 1128, serial port 1130, short-range communications subsystem 1140 or any other suitable subsystem 1142, and installed by a user in the RAM 1126 or preferably a nonvolatile store (not shown) for execution by the microprocessor 1138. Such flexibility in application installation increases the functionality of the device and may provide enhanced on-device functions, communication-related functions, or both. For example, secure communication applications may enable electronic commerce functions and other such financial transactions to be performed using the mobile device 1100. These applications will however, according to the above, in many cases need to be approved by a carrier.

In a data communication mode, a received signal such as a text message or web page download will be processed by the communication subsystem 1111 and input to the microprocessor 1138, which preferably further processes the received signal for output to the display 1122, or alternatively to an auxiliary I/O device 1128. A user of mobile device 1100 may also compose data items such as email messages for example, using the keyboard 1132, which is preferably a complete alphanumeric keyboard or telephone-type keypad, in conjunction with the display 1122 and possibly an auxiliary I/O device 1128. Such composed items may then be transmitted over a communication network through the communication subsystem 1111.

For voice communications, overall operation of mobile device 1100 is similar, except that received signals would preferably be output to a speaker 1134 and signals for transmission would be generated by a microphone 1136. Alternative voice or audio I/O subsystems, such as a voice message recording subsystem, may also be implemented on mobile device 1100. Although voice or audio signal output is preferably accomplished primarily through the speaker 1134, display 1122 may also be used to provide an indication of the identity of a calling party, the duration of a voice call, or other voice call related information for example.

Serial port 1130 in Figure 3 would normally be implemented in a personal digital assistant (PDA)-type mobile device for which synchronization with a user's desktop computer (not shown) may be desirable. Such a port 1130 would enable a user to set preferences through an external device or software application and would extend the capabilities of mobile device 1100 by providing for information or software downloads to mobile device 1100 other than through a wireless communication network. The alternate download path may for example be used to load an encryption key onto the device through a direct and thus reliable and trusted connection to thereby enable secure device communication.

Other communications subsystems 1140, such as a short-range communications subsystem, is a further optional component which may provide for communication between mobile device 1100 and different systems or devices, which need not necessarily be similar devices. For example, the subsystem 1140 may include an infrared device and associated circuits and components or a Bluetooth™ communication module to provide for communication with similarly enabled systems and devices.

In one embodiment, mobile device 1100 could include a Global Positioning System (GPS) or Advanced Global Positioning System (AGPS) module to enable mobile station 1100 to determine its location.

The exemplary mobile device of Figure 3 is meant to be illustrative and other devices with more or fewer features than the above could equally be used for the present method and apparatus.

The embodiments described herein are examples of structures, systems or methods having elements corresponding to elements of the techniques of this application. This written description may enable those skilled in the art to make and use embodiments having alternative elements that likewise correspond to the elements of the techniques of this application. The intended scope of the techniques of this application thus includes other structures, systems or methods that do not differ from the techniques of this application as described herein, and further includes other structures, systems or methods with insubstantial differences from the techniques of this application as described herein.

## Claims

1. A system for enhanced security using location-based wireless authentication comprising:
a mobile device (20), the mobile device having a unique identifier associated therewith and capable of sending a message (22, 26) with the unique identifier appended thereto;
a base station (34), the base station capable of receiving the message (22, 26) from the mobile device (20) and having:
a location detection system to locate the mobile device; means to append a location identifier to said message; and a communications subsystem to forward the message through a data network; and
a recipient device, system or apparatus (30), the recipient receiving the message (22, 26) through the data network and having means (32) to authenticate the message, the means to authenticate the message comprising a checking means to check whether the location identifier corresponds with an expected location (15) for the mobile device (20), the expected location for the mobile device being a geographic location known to the recipient.

2. The system of claim 1, wherein the location detection system is an enhanced 911 system.

3. The system of either claim 1 or claim 2, wherein the message (22, 26) includes an identifier to indicate the expected location (15).

4. The system of any one of claims 1 to 3, wherein the message includes a password.

5. The system of any one of claims 1 to 4, wherein the recipient is a financial services provider device, system or apparatus.

6. The system of claim 5, wherein the financial services provider (36, 38) comprises means to provide payment to a merchant device, system, or apparatus at the location (15) of said mobile device.

7. The system of claim 6, wherein the message (22, 26) is a transaction request and includes a merchant identifier and a transaction amount.

8. The system of claim 6 or claim 7, further comprising a point of sale terminal connected to the financial services provide (6, 38), wherein the message is a location verification message.

9. The system of any one of claims 1 to 8, wherein the message (22, 26) is encrypted.

10. The system of any one of claims 1 to 9, wherein the geographic location known to the recipient (30) is associated with information received in the message (22, 26) by the recipient.

11. A method for enhancing security using location-based wireless authentication for a mobile device (20) comprising the steps of:
sending from the mobile device (20) to a base station (34) a message (22, 26), the message having a unique identifier associated with the mobile device (20);
determining, at the base station a location of the mobile device;
appending, at the base station (34), a location identifier to said message (22, 26);
sending the message to a recipient device, system or apparatus (30);
and
authenticating the message at the recipient (30), said authenticating step confirming that the location identifier appended at the base station (34) corresponds with an expected location (15) for the mobile device (20), the expected location for the mobile device being a geographic location known to the recipient.

12. The method of claim 11, wherein the location identifier is an enhanced 911 location identifier.

13. The method of claim 10 or claim 11, wherein the message (22, 26) includes a password for use by said authenticating step.

14. The method of any one of claims 11 to 13, wherein the message (22, 26) is encrypted.

15. The method of any one of claims 11 to 14, wherein the message (22, 26) sent from the mobile device (20) is a request to complete a financial transaction and includes a merchant identifier.

16. The method of claim 15, wherein said authenticating step confirms the location identifier corresponds with a location (15) of said merchant identifier.

17. The method of claim 16, wherein if said authenticating step confirms that the location identifier corresponds with the location (15) of the merchant identifier, the method further comprises the step of forwarding the message (22, 26) to a financial service provider device, system or apparatus (36, 38) to complete the transaction.

18. The method of any one of claims 15 or 17, wherein the mobile device (20) prompts a user to input the merchant identifier.

19. The method of any one of claims 11 to 18, further comprising the step of using a point of sale terminal connected to a point of sale processing location (35) to perform a financial transaction, wherein the authenticating step verifies the point of sale terminal is located within an expected proximity to the mobile device (20).

20. The method of any one of claims 11 to 19, wherein the geographic location known to the recipient (30) is associated with information received in the message (22, 26) by the recipient (30).

21. A machine readable medium comprising program code means executable in a processor of a computing system for implementing the method of any one of claims 11 to 20.

22. A communications network including a system according to any one of claims 1 to 10.

23. A base station (34) for use in authentication of a message, the base station (34) forming part of a wireless network and communication with at least one mobile device (20) and with a network, the base station comprising:
means to receive a message (22, 26) from the at least one mobile device (20);
means to determine a location of the mobile device;
means to append to the message (22, 26) a location identifier, said location identifier identifying a location corresponding to the device (20); and
a forwarding means to forward the message (22, 26) with the location identifier to a recipient device, system or apparatus (30) for authenticating the message.

24. The base station (34) of claim 23, wherein the location identifier identifies a location of the base station (34).

25. The base station of claim 23, wherein the location associated with the location identifier is determined by an enhanced 911 system.

26. A method, at a base station, of authenticating a message comprising the steps of:
receiving a message (22, 26) from a communication device;
determining the location of the communication device;
appending to the message a location identifier, said location identifier identifying the location corresponding to the communication device (20);
forwarding the message to a recipient device, apparatus or system (30);
wherein said location identifier can be used by said recipient (30) to authenticate that the message is sent from an expected location (15).

27. The method of claim 26, wherein said message comprises a transaction request and said transaction request is a commercial purchase.

28. The method of claim 26 or claim 27, wherein the location identifier identifies the location (15) of a mobile communication device (20).

29. The method of claim 26 or claim 27, wherein the location identifier identifies the location of a base station (34).

30. The method of any one of claims 26 to 29, wherein the message (22, 26) includes a personal identification number.

31. The method of any one of claims 26 to 30, wherein the message (22, 26) includes an International Mobile Equipment Identity for the communication device (20).

## Patentansprüche

1. Ein System für erhöhte Sicherheit mit positionsbasierter drahtloser Authentifizierung umfassend:
eine mobile Vorrichtung (20), wobei die mobile Vorrichtung einen eindeutigen Identifikator hat, der damit assoziiert ist und in der Lage ist,
eine Nachricht (22, 26) mit dem daran angefügten eindeutigen Identifikator zu senden;
eine Basisstation (34), wobei die Basisstation in der Lage ist, die Nachricht (22, 26) von der mobilen Vorrichtung (20) zu erhalten, und mit:
einem Positionsdetektionssystem, um die mobile Vorrichtung zu lokalisieren;
Mittel, um einen Positionsidentifikator an die Nachricht anzufügen;
und
ein Kommunikationsuntersystem, um die Nachricht durch ein Datennetzwerk weiterzuleiten; und
eine Empfängervorrichtung, System oder Gerät (30), wobei der Empfänger die Nachricht (22, 26) durch das Datennetzwerk erhält und Mittel (32) hat, um die Nachricht zu authentifizieren, wobei die Mittel zum Authentifizieren der Nachricht ein Testmittel umfassen, um zu testen,
ob der Positionsidentifikator mit einer erwarteten Position (15) für die mobile Vorrichtung (20) korrespondiert, wobei die erwartete Position für die mobile Vorrichtung eine geographische Position ist, die dem Empfänger bekannt ist.

2. Das System nach Anspruch 1, wobei das Positionsdetektionssystem ein verbessertes 911 System ist.

3. Das System nach einem von Anspruch 1 oder Anspruch 2, wobei die Nachricht (22, 26) einen Identifikator enthält, um die erwartete Position (15) anzugeben.

4. Das System nach einem der Ansprüche 1 bis 3, wobei die Nachricht ein Passwort enthält.

5. Das System nach einem der Ansprüche 1 bis 4, wobei der Empfänger eine Finanzdienstleistungsanbietervorrichtung, System oder Gerät ist.

6. Das System nach Anspruch 5, wobei der Finanzdienstleistungsanbieter (36, 38) Mittel umfasst, um Bezahlung an eine Händlervorrichtung, System oder Gerät an der Position (15) der mobilen Vorrichtung bereitzustellen.

7. Das System nach Anspruch 6, wobei die Nachricht (22, 26) eine Transaktionsanforderung ist und einen Händleridentifikator und einen Transaktionsbetrag enthält.

8. Das System nach Anspruch 6 oder Anspruch 7, ferner umfassend einen Kassenterminal, der mit dem Finanzdienstleistungsanbieter (6, 38) verbunden ist, wobei die Nachricht eine Positionsverifikationsnachricht ist.

9. Das System nach einem der Ansprüche 1 bis 8, wobei die Nachricht (22, 26) verschlüsselt ist.

10. Das System nach einem der Ansprüche 1 bis 9, wobei die geographische Position, die dem Empfänger (30) bekannt ist, mit Information in der Nachricht (22,26) assoziiert ist, die von dem Empfänger erhalten wird.

11. Ein Verfahren zum Verbessern von Sicherheit unter Benutzung positionsbasierter drahtloser Authentifizierung für eine mobile Vorrichtung (20), umfassend die Schritte:
Senden, von der mobilen Vorrichtung (20) an eine Basisstation (34), einer Nachricht (22, 26), wobei die Nachricht einen eindeutigen Identifikator hat, der mit der mobilen Vorrichtung (20) assoziiert ist;
Bestimmen, an der Basisstation, einer Position der mobilen Vorrichtung;
Anfügen, an der Basisstation (34), eines Positionsidentifikators an die Nachricht (22, 26);
Senden der Nachricht an eine Empfiängervorrichtung, System oder Gerät (30); und
Authentifizieren der Nachricht bei dem Empfänger (30), wobei der Authentifizierungsschritt bestätigt, dass der Positionsidentifikator, der an der Basisstation (34) angefügt wurde, mit einer erwarteten Position (15) für die mobile Vorrichtung (20) korrespondiert, wobei die erwartete Position für die mobile Vorrichtung eine geographische Position ist, die dem Empfänger bekannt ist.

12. Das Verfahren nach Anspruch 11, wobei der Positionsidentifikator ein
verbesserter 911 Positionsidentifikator ist.

13. Das Verfahren nach Anspruch 10 oder Anspruch 11, wobei die Nachricht (22, 26) ein Passwort zur Benutzung durch den Authentifizierungsschritt enthält.

14. Das Verfahren nach einem der Anspruch 11 bis 13, wobei die Nachricht (22, 26) verschlüsselt ist.

15. Das Verfahren nach einem der Ansprüche 11 bis 14, wobei die Nachricht (22, 26), die von der mobilen Vorrichtung (20) gesendet wird, eine Anforderung ist, um eine Finanztransaktion abzuschließen, und einen Händleridentifikator enthält.

16. Das Verfahren nach Anspruch 15, wobei der Authentifizierungsschritt bestätigt, dass der Positionsidentifikator mit einer Position (15) des Händleridentifikators korrespondiert.

17. Das Verfahren nach Anspruch 16, wobei, wenn der Authentifizierungsschritt bestätigt, dass der Positionsidentifikator mit der Position (15) des Händleridentifikators korrespondiert, das Verfahren den Schritt des Weiterleitens der Nachricht (22, 26) an eine Finanzdienstleistungsanbietervorrichtung, System oder Gerät (36, 38) umfasst, um die Transaktion abzuschliessen.

18. Das Verfahren nach einem der Ansprüche 15 oder 17, wobei die mobile
Vorrichtung (20) einen Benutzer auffordert, den Händleridentifikator einzugeben.

19. Das Verfahren nach einem der Ansprüche 11 bis 18, ferner umfassend
den Schritt des Benutzens eines Kassenterminals, der mit einer Kassenverarbeitungsposition (35) verbunden ist, um eine Finanztransaktion durchzuführen, wobei der Authentifizierungsschritt verifiziert, dass der Kassenterminal innerhalb einer erwarteten Nähe zu der mobilen Vorrichtung (20) lokalisiert ist.

20. Das Verfahren nach einem der Ansprüche 11 bis 19, wobei die geographische Position, die dem Empfänger (30) bekannt ist, mit Information in der Nachricht (22,26) assoziiert ist, die von dem Empfänger (30) erhalten wird.

21. Ein maschinenlesbares Medium, das Programcodemittel umfasst, die in
einem Prozessor eines Berechnungssystems für die Implementierung des Verfahrens nach einem der Ansprüche 11 bis 20 ausführbar sind.

22. Ein Kommunikationsnetzwerk, das ein System gemäß einem der Ansprüche 1 bis 10 enthält.

23. Eine Basisstation (34) zum Benutzen beim Authentifizieren von einer
Nachricht, wobei die Basisstation (34) einen Teil eines drahtlosen Netzwerks formt, und zum Kommunizieren mit zumindest einer mobilen Vorrichtung (20) und mit einem Netzwerk, wobei die Basisstation umfasst:
Mittel, um eine Nachricht (22, 26) von der zumindest einen mobilen Vorrichtung (20) zu erhalten;
Mittel, um eine Position der mobilen Vorrichtung zu bestimmen;
Mittel, um an die Nachricht (22, 26) einen Positionsidentifikator anzufügen, wobei der Positionsidentifikator eine Position identifiziert, die zu der Vorrichtung (20) korrespondiert; und
ein Weiterleitungsmittel, um die Nachricht (22, 26) mit dem Positionsidentifikator an eine Empfängervorrichtung, System oder Gerät (30) zur Authentifizierung der Nachricht weiterzuleiten.

24. Die Basisstation (34) nach Anspruch 23, wobei der Positionsidentifikator
eine Position der Basisstation (34) identifiziert.

25. Die Basisstation nach Anspruch 23, wobei die Position, die mit dem
Positionsidentifikator assoziiert ist, durch ein verbessertes 911 System bestimmt ist.

26. Ein Verfahren zum Authentifizieren einer Nachricht an einer Basisstation,
umfassend die Schritte:
Erhalten einer Nachricht (22, 26) von einer Kommunikationsvorrichtung;
Bestimmen der Position der Kommunikationsvorrichtung;
Anfügen eines Positionsidentifikators an die Nachricht, wobei der Positionsidentifikator die Position identifiziert, die mit der Kommunikationsvorrichtung (20) korrespondiert;
Weiterleiten der Nachricht an eine Empfängervorrichtung, Gerät oder
System (30);
wobei der Positionsidentifikator von dem Empfänger (30) benutzt werden kann, um zu Authentifizieren, das die Nachricht von einer erwarteten Position (15) gesendet wurde.

27. Das Verfahren nach Anspruch 26, wobei die Nachricht eine Transaktionsanforderung umfasst und die Transaktionsanforderung ein kommerzieller Kauf ist.

28. Das Verfahren nach Anspruch 26 oder Anspruch 27, wobei der
Positionsidentifikator die Position (15) einer mobilen Kommunikationsvorrichtung (20) identifiziert.

29. Das Verfahren nach Anspruch 26 oder Anspruch 27, wobei der
Positionsidentifikator die Position einer Basisstation (34) identifiziert.

30. Das Verfahren nach einem der Ansprüche 26 bis 29, wobei die Nachricht (22, 26) eine persönliche Identifikationsnummer enthält.

31. Das Verfahren nach einem der Ansprüche 26 bis 30, wobei die Nachricht (22, 26) eine internationale Mobilgerätidentität für die Kommunikationsvorrichtung (20) enthält.

## Revendications

1. Système de sécurité améliorée utilisant une authentification sans fil basée sur la position géographique, comprenant :
un dispositif mobile (20), le dispositif mobile ayant un identificateur unique qui lui est associé et étant capable d'envoyer un message (22, 26) auquel l'identificateur unique est concaténé ;
une station de base (34), la station de base étant capable de recevoir le message (22, 26) du dispositif mobile (20) et possédant :
un système de détection de position géographique pour détecter la position géographique du dispositif mobile ;
un moyen permettant de concaténer audit message un identificateur de position géographique ; et
un sous-système de communication destiné à acheminer le message sur un réseau de données ;
un dispositif, système ou appareil de réception (30), le récepteur recevant le message (22, 26) via le réseau de données et possédant un moyen (32) pour authentifier le message, le moyen d'authentification du message comprenant un moyen de contrôle destiné à contrôler si l'identificateur de position géographique correspond à une position géographique attendue (15) pour le dispositif mobile (20), la position géographique attendue pour le dispositif mobile étant une position géographique connue du récepteur.

2. Système selon la revendication 1, dans lequel le système de détection de la position géographique est un système 911 amélioré.

3. Système selon la revendication 1 ou la revendication 2, dans lequel le message (22, 26) comprend un identificateur pour indiquer la position géographique attendue (15).

4. Système selon l'une quelconque des revendications 1 à 3, dans lequel le message comprend un mot de passe.

5. Système selon l'une quelconque des revendications 1 à 4, dans lequel le récepteur est un dispositif, système ou appareil de fourniture de services financiers.

6. Système selon la revendication 5, dans lequel le fournisseur de services financiers (36, 38) comprend un moyen destiné à fournir un paiement à un dispositif, système ou appareil de commerçant dans la position géographique (15) dudit dispositif mobile.

7. Système selon la revendication 6, dans lequel le message (22, 26) est une demande d'opération et comprend un identificateur de commerçant et un montant de l'opération.

8. Système selon la revendication 6 ou la revendication 7, comprenant en outre un terminal de point de vente connecté au fournisseur de services financiers (36, 38), dans lequel le message est un message de vérification de position géographique.

9. Système selon l'une quelconque des revendications 1 à 8, dans lequel le message (22, 26) est chiffré.

10. Système selon l'une quelconque des revendications 1 à 9, dans lequel la position géographique connue du récepteur (30) est associée à des informations dans le message (22, 26) reçues par le récepteur.

11. Procédé destiné à améliorer la sécurité en utilisant une authentification sans fil basée sur la position géographique pour un dispositif mobile (20), comprenant les étapes consistant à :
envoyer un message (22, 26) entre le dispositif mobile (20) et une station de base (34), le message comportant un identificateur unique associé au dispositif mobile (20) ;
déterminer, sur la station de base, une position géographique du dispositif mobile ;
concaténer un identificateur de position audit message (22, 26) par la station de base ;
envoyer le message à un dispositif, système ou appareil de réception (30) ; et
authentifier le message sur le récepteur (30), ladite étape d'authentification confirmant que l'identificateur de position géographique concaténé par la station de base (34) correspond à une position géographique attendue (15) pour le dispositif mobile (20), la position géographique attendue pour le dispositif mobile étant une position géographique connue du récepteur.

12. Procédé selon la revendication 11, dans lequel l'identificateur de position géographique est un identificateur de position géographique 911 amélioré.

13. Procédé selon la revendication 10 ou la revendication 11, dans lequel le message (22, 26) comprend un mot de passe à utiliser dans ladite étape d'authentification.

14. Procédé selon l'une quelconque des revendications 11 à 13, dans lequel le message (22, 26) est chiffré.

15. Procédé selon l'une quelconque des revendications 11 à 14, dans lequel le message (22, 26) envoyé à partir du dispositif mobile (20) est une demande de réalisation d'une opération financière et comprend un identificateur du commerçant.

16. Procédé selon la revendication 15, dans lequel ladite étape d'authentification confirme que l'identificateur de position géographique correspond à une position géographique (15) dudit identificateur du commerçant.

17. Procédé selon la revendication 16, dans lequel, si ladite étape d'authentification confirme que l'identificateur de position géographique correspond à la position géographique (15) de l'identificateur de commerçant, le procédé comprend en outre l'étape consistant à acheminer le message (22, 26) vers un dispositif, système ou appareil de fourniture de services financiers (36, 38) afin de terminer l'opération.

18. Procédé selon l'une quelconque des revendications 15 et 17, dans lequel le dispositif mobile (20) invite un utilisateur à saisir l'identificateur de commerçant.

19. Procédé selon l'une quelconque des revendications 11 à 18, comprenant en outre l'étape consistant à utiliser un terminal de point de vente connecté à une position géographique de traitement de point de vente (35) afin d'effectuer une opération financière, dans lequel l'étape d'authentification vérifie que le terminal de point de vente est situé à une proximité attendue du dispositif mobile (20).

20. Procédé selon l'une quelconque des revendications 11 à 19, dans lequel la position géographique connue du récepteur (30) est associée à des informations reçues dans le message (22, 26) par le récepteur (30).

21. Support lisible par machine, comprenant des moyens de code de programme pouvant être exécutés sur un processeur d'un système informatique afin de mettre en oeuvre le procédé selon l'une quelconque des revendications 11 à 20.

22. Réseau de communication comprenant un système selon l'une quelconque des revendications 1 à 10.

23. Station de base (34) destinée à être utilisée dans l'authentification d'un message, la station de base (34) faisant partie d'un réseau sans fil et communiquant avec au moins un dispositif mobile (20) et avec un réseau, la station de base comprenant :
un moyen destiné à recevoir un message (22, 26) en provenance dudit au moins un dispositif mobile (20) ;
un moyen destiné à déterminer une position géographique du dispositif mobile ;
un moyen destiné à concaténer au message (22, 26) un identificateur de position géographique, ledit identificateur de position géographique identifiant une position géographique correspondant au dispositif (20) ; et
un moyen d'acheminement destiné à acheminer le message (22, 26) avec l'identificateur de position géographique vers un dispositif, système ou appareil de réception (30) afin d'authentifier le message.

24. Station de base (34) selon la revendication 23, dans laquelle l'identificateur de position géographique identifie une position géographique de la station de base (34).

25. Station de base (34) selon la revendication 23, dans laquelle la position géographique associée à l'identificateur de position géographique est déterminée par un système 911 amélioré.

26. Procédé d'authentification d'un message sur une station de base, comprenant les étapes consistant à :
recevoir un message (22, 26) d'un dispositif de communication ;
déterminer la position géographique du dispositif de communication ;
concaténer au message un identificateur de position géographique, ledit identificateur de position géographique identifiant la position géographique correspondant au dispositif de communication (20) ;
acheminer le message vers un dispositif, un appareil ou un système récepteur (30) ;
dans lequel ledit identificateur de position géographique peut être utilisé par ledit récepteur (30) pour authentifier le fait que le message est envoyé à partir d'une position géographique attendue (15).

27. Procédé selon la revendication 26, dans lequel ledit message comprend une demande d'opération et ladite demande d'opération est un achat commercial.

28. Procédé selon la revendication 26 ou la revendication 27, dans lequel l'identificateur de position géographique identifie la position géographique (15) d'un dispositif de communication mobile (20).

29. Procédé selon la revendication 26 ou la revendication 27, dans lequel l'identificateur de position géographique identifie la position géographique (15) d'une station de base (34).

30. Procédé selon l'une quelconque des revendications 26 à 29, dans lequel le message (22, 26) comprend un numéro d'identification personnel.

31. Procédé selon l'une quelconque des revendications 26 à 30, dans lequel le message (22, 26) comprend une identité internationale d'équipement mobile pour le dispositif de communication (20).
